Europäisches Patentamt

(19) European Patent Office   (11) Numéro de publication: **0 015 326**

Office européen des brevets   **B1**

(12)   **FASCICULE DE BREVET EUROPEEN**

(45) Date de publication du fascicule du brevet: 30.05.84   (51) Int. Cl.³: **B 62 D 7/14,** B 62 D 47/00, B 62 D 53/00

(21) Numéro de dépôt: **79200785.8**

(22) Date de dépôt: **20.12.79**

(54) **Véhicule routier articulé.**

(30) Priorité: **01.03.79 BE 193781**

(43) Date de publication de la demande:
**17.09.80 Bulletin 80/19**

(45) Mention de la délivrance du brevet:
**30.05.84 Bulletin 84/22**

(84) Etats contractants désignés:
**DE NL SE**

(56) Documents cités:
**DD-A- 85 278**
**DE-A-2 263 506**
**DE-B-1 755 368**
**DE-B-2 716 956**
**US-A-2 843 417**

(73) Titulaire: **Delta Automotive Engineering**
**Avenue de Fré**
**B-4000 Uccle (BE)**

(72) Inventeur: **Vin, Jean-Pierre**
**12, Place Gui d'Arezzo**
**Bruxelles (BE)**

(74) Mandataire: **Pirson, Jean et al**
**c/o Bureau GEVERS SA 7 rue de Livourne Bte 1**
**B-1050 Brussels (BE)**

EP 0 015 326 B1

Courier Press, Leamington Spa, England.

## Description

Un des facteurs limitant la capacité des véhicules de transport en commun réside dans les limitations dimensionnelles légales qui leur sont imposées, à savoir 12 m de longueur et 2,500 m de largeur.

De tels véhicules pourraient être très difficiles à manoeuvrer en trafic congestionné et sur artères étroites, si d'autres limitations n'étaient imposées régissant les conditions d'inscription en courbe, à savoir dans les pays les plus exigeants, 12 m de rayon hors tout pour le coin avant extérieur à la courbe et, dans ces mêmes conditions, 6,500 m de rayon minimum pour la face latérale intérieure à la courbe au droit de l'essieu arrière, le coin arrière extérieur à la courbe ne pouvant balayer au maximum que 500 mm en dehors de la zone balayée au droit de l'essieu arrière.

De nouvelles législations réduiront le rayon interne minimum à 5,300 m et ne limiteront plus le balayage. Cependant, les utilisateurs de bus de ville ne pourront pratiquement s'écarter des législations actuelles, sauf à s'exposer à des problèmes de maniabilité.

Il résulte de ces impératifs d'inscription en courbe que la surface théorique déterminée par les longueur et largeur maximum se trouve diminuée, la longueur pratique ne pouvant excéder 11,800 m sauf à devoir couper exagérément les coins avant, les coins arrière devant l'être également.

Des véhicules de transport en commun de plus grande capacité peuvent résoudre de nombreux problèmes d'exploitation et en réduire considérablement les coûts, d'où les bus à étages et articulés, ces derniers pouvant légalement atteindre 18 m.

Cependant, à ce jour, aucun véhicule articulé, même inférieur à 18 m en longueur, ne peut répondre aux conditions d'inscription en courbe prévues originellement pour des véhicules rigides.

Des exemptions légales sont donc nécessaires qui ne résolvent en rien les problèmes de maniabilité.

Il existe actuellement deux types de bus articulés ayant comme similitude l'utilisation d'une articulation unique, et comme différence le fait que l'essieu de la partie guidée du véhicule est pourvu, ou non, d'un dispositif directionnel des roues. Ceux non pourvus du dispositif directionnel ne peuvent répondre aux prescriptions relatives au rayon interne minimum, et ceux pourvus du dispositif directionnel ne peuvent répondre aux prescriptions relatives au balayage maximum. Le rayon interne de ces derniers est rarement suffisant pour répondre également aux prescriptions, et leur conception entraîne souvent aussi bien une instabilité directionnelle à haute vitesse que des escalades de trottoirs au départ d'arrêts nécessitant un braquage substantiel.

Il existe en outre deux types de bus articulés, ceux dits "tireurs", c'est-à-dire ceux dont l'essieu moteur est installé dans la partie guidante du véhicule articulé, et ceux dits "pousseurs", c'est-à-dire ceux dont l'essieu moteur est installé dans la partie guidée du véhicule articulé.

Alors que les véhicules "tireurs" peuvent être pourvus d'essieux de véhicule guidé dirigés ou non, les véhicules "pousseurs" ne s'accomodent que d'essieux de véhicule guidé non dirigés, car pourvus des moyens de traction.

Par contre, alors que les véhicules "tireurs" ne peuvent s'accomoder que d'essieux arrière de véhicule guidant non dirigés, car pourvus des moyens de traction, les véhicules "pousseurs" peuvent s'accomoder d'essieux arrière de véhicule guidant dirigés ou non.

Un type d'autobus articulé du type "pousseur" avec les caractéristiques du préambule de la revendication 1 est décrit par la demande allemande 27 16 956. Cependant, la direction de l'essieu médian du véhicule est commandée par la direction de l'essieu avant, ce qui ne résoud en rien le problème du balayage ou escalade de trottoir lors d'un braquage substantiel des essieux directeurs du véhicule.

Selon une autre proposition contenue dans le brevet américain 2,843,417, l'embiellage commandé par l'articulation agit sur les roues arrières du véhicule articulé et ceci ne peut qu'aggraver le phénomène de balayage du trottoir ou du terre-plein dans le sens exposé ci-dessus.

Enfin la demande allemande 1,755,368 décrit une commande hydraulique permettant l'orientation d'un essieu d'un véhicule tracté, sans cependant résoudre en aucune manière les problèmes qui ont été exposés ci-dessus.

L'invention à précisément pour but de réaliser un véhicule routier articulé qui répond aux exigences énoncées ci-dessus et qui évite des escalades de trottoirs au départ d'arrêts nécessitant un braquage substantiel.

Ce but est obtenu par le fait que les moyens de directions de l'essieu arrière du véhicule guidant sont commandés en fonction de l'angle de flambage entre le véhicule guidant et le véhicule guidé, à partir d'une section d'articulation solidaire du véhicule guidé.

Dans une première forme de réalisation les moyens de direction précités sont constitués par une bielle tourillonnante, d'une part, sur une rotule montée sur la section d'articulation solidaire du véhicule guidé et, d'autre part, sur une rotule montée sur levier ou bras-relais de direction agissant sur un jeu de leviers capables d'orienter les fusées de l'essieu arrière précité.

Dans une deuxième forme de réalisation, les moyens de direction précités agissant sur les fusées de l'essieu arrière précité comportent une bielle tourillonnant, d'une part, sur une rotule montée sur la section d'articulation solidaire du véhicule guidé et, d'autre part, sur la base d'un levier, à bras multiples en forme de T disposés de part et d'autre d'un axe de rotation dudit levier sur le véhicule guidant précité, les autres extrémités libres des bras précités étant équipées de roues à gorge pour suivre, chacune, une des courbures internes d'une came en forme de "d" dont la partie rectiligne est à assimiler à une seconde bielle dont l'extrémité libre tourillonne sur une rotule fixée sur un levier, ou bras-relais de direction, agissant sur un jeu de leviers capable d'orienter les fusées de l'essieu arrière précité.

Dans une troisième forme de réalisation, l'articulation reliant les véhicules guidant et guidé est équipée, au centre de la section solidaire du véhicule guidé, d'une came dont la rotation agit sur un piston qui se meut dans un cylindre hydraulique monté au centre de la section d'articulation solidaire du véhicule guidant pour refouler alternativement un liquide hydraulique dans deux conduites communiquant avec un second cylindre, de part et d'autre d'un piston se déplaçant dans ce second cylindre, sous l'influence des variations volumétriques, la tige dudit piston agissant sur un jeu de leviers solidaires des fusées des roues pour agir sur leur orientation.

D'autres détails et avantages de l'invention ressortiront de la description qui sera donnée ci-après d'un véhicule routier articulé, selon l'invention. Cette description n'est donnée qu'à titre d'exemple et ne limite pas l'invention; les notations de référence se rapportent aux figures ci-jointes.

La figure 1 schématise, vue par le dessous, cinq positions dénommées a, b, c, d et e des véhicules guidant et guidé, dans une première forme de réalisation.

La figure 2 représente, à une plus grande échelle, également vue par le dessous, les moyens de direction dans une deuxième forme de réalisation.

La figure 3 représente, dans les mêmes conditions et schématiquement, les moyens de direction selon une troisième forme de réalisation.

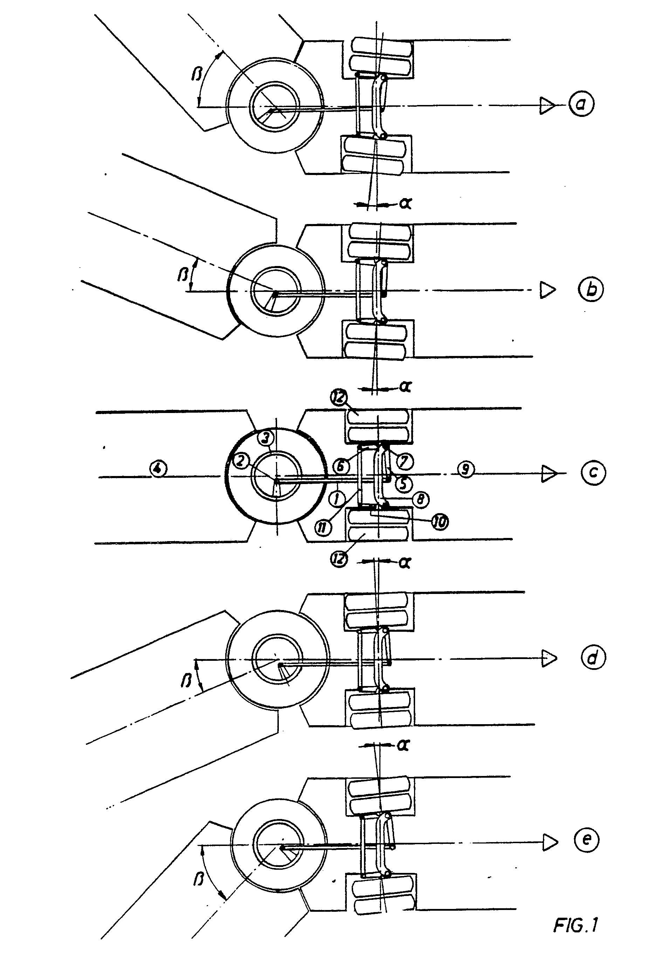

Dans la conception selon la première forme de réalisation, la figure 1, illustre cinq positions respectives des véhicules guidant et guidé, depuis une position de braquage extrême à droite — figure 1(a) — jusqu'à une position de braquage extrême à gauche — figure 1(e) — tandis que la figure 1(c) illustre le cas de véhicules en position d'alignement.

Dans cette forme de réalisation, le contrôle directionnel de l'essieu arrière du véhicule guidant est réalisé de manière telle qu'il existe un rapport constant K entre l'angle moyen $\alpha$ des roues de l'essieu arrière et celui, $\beta$, formé par l'axe géométrique du véhicule guidé et le prolongement de l'axe géométrique du véhicule guidant, c'est-à-dire de l'articulation.

Ce rapport constant K, entre l'angle moyen $\alpha$ et l'angle $\beta$, est choisi de telle sorte que pour un braquage de 12 m de rayon extérieur, le rayon intérieur au droit de la face interne du véhicule guidé soit égal ou supérieur à 6,5 m. Une autre exigence est que le balayage du coin arrière extérieur à la courbe du véhicule guidé ne dépasse pas 0,5 m par rapport à la face externe de ce même véhicule guidé et que le balayage du coin extérieur à la courbe du véhicule guidant ne dépasse pas 0,5 m par rapport à la face externe de ce même véhicule guidant.

Ceci est réalisé en prévoyant une bielle 1 qui tourillonne sur une rotule 2 montée sur la section d'articulation 3 solidaire de la partie guidée du véhicule 4. Cette bielle 1 tourillonne, à son extrémité opposée, sur l'extrémité libre du bras 5 du levier coudé 5—6 pivotant en 7 par rapport au corps d'essieu 8 solidaire du véhicule guidé 9, levier coudé 5—6 agissant, tout comme le levier 10, monté à charnière à l'extrémité de la tringle 11, sur l'orientation des fusées des roues 12.

Les diverses positions (a)—(e) de la figure 1 montrent clairement qu'il est possible de réaliser un rapport constant K résultant du quotient

$$\frac{\alpha}{\beta}$$

qui assure, par un jeu de leviers et de bielles compact et résistant, un braquage d'angularité réduite répondant aux exigences énoncées dans le préambule.

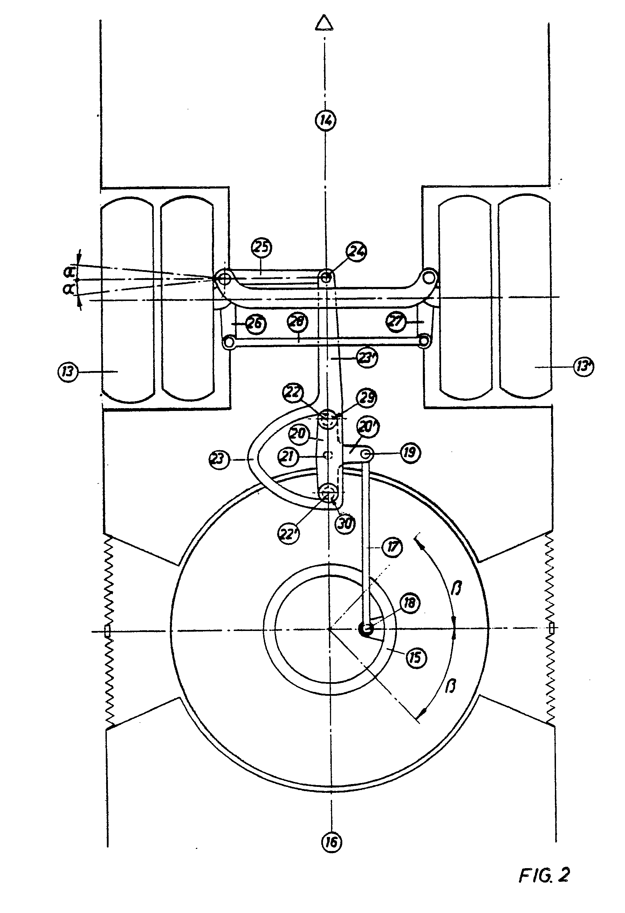

Dans une deuxième forme de réalisation (figure 2) le contrôle directionnel est réalisé de manière telle qu'il existe un rapport variable V entre l'angularité $\alpha$ des roues 13 de l'essieu arrière du véhicule guidant 14 et celle $\beta$ de l'articulation 15 reliant ce dernier au véhicule guidé 16.

Le rapport variable s'obtient en reliant à charnière une bielle 17, d'une part, à une rotule 18 fixée sur la section d'articulation solidaire de la partie guidée du véhicule et, d'autre part, à une rotule 19 montée à la base 20' du levier à bras multiples 20 monté à pivotement 21.

Le levier à bras multiples fait partie d'un mécanisme décrit et revendiqué dans un brevet belge antérieur de la demanderesse.

Comme le montre la figure 2, le levier à bras multiples 20 est équipé de roues à gorge 22 et 22' pour suivre, chacune, une des courbures internes d'une came 23 en forme de "d" dont la partie rectiligne 23' est à assimiler à une seconde bielle dont l'extrémité libre tourillonne sur une rotule 24 montée sur le bras 25 du levier coudé 25—26.

Le bras 25, ou bras-relais de direction de l'essieu arrière du véhicule guidant, agit sur l'angularité des fusées des roues 13. Un levier 27 agit sur l'angularité des fusées des roues 13' par l'intermédiaire de la tringle 28 reliant à charnière le levier 27 au bras 26 du levier coudé 25—26.

Lorsque les véhicules guidant et guidé sont en alignement, les roues à gorge 22 et 22' se logent dans des découpes d'angles 29 et 30.

5 **0 015 326** 6

Lorsque l'articulation est entraînée d'un angle vers la gauche par le véhicule guidé, la bielle 17 fait basculer le levier à bras multiples 20 de telle sorte que la roue à gorge 22 s'extrait de la découpe 29 et repousse la bielle 23' de manière à agir sur le jeu de leviers et de tringles décrit ci-dessus pour amener les fusées des roues 13 et 13' dans les positions de braquage correspondantes requises.

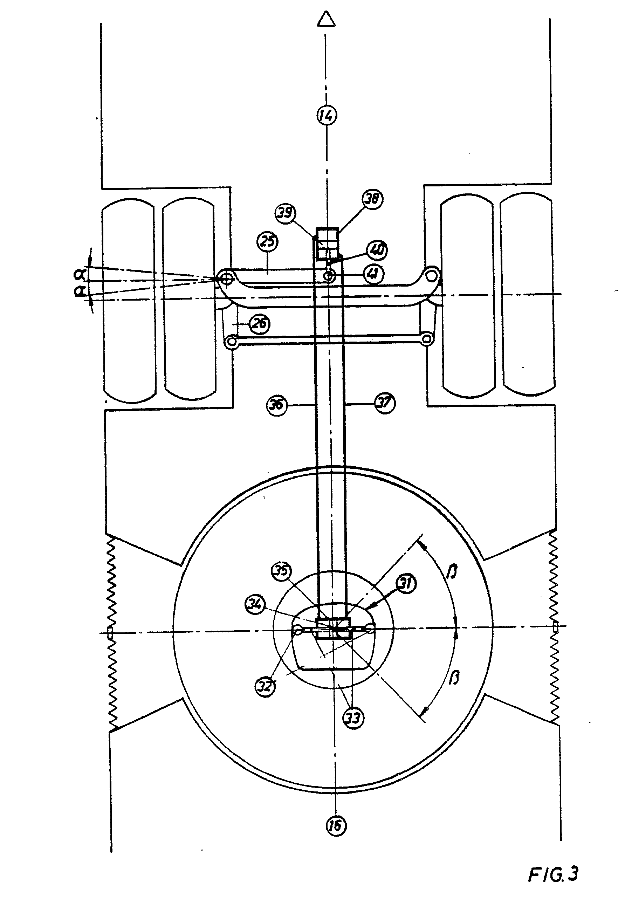

Dans le système de contrôle directionnel selon la troisième forme de réalisation (figure 3), une double came interne 31 est agencée au centre de la section d'articulation solidaire du véhicule guidé 16. Des galets 32 montés à l'extrémité des tiges 33 du piston 34 logé dans le cylindre hydraulique 35, agencé au centre de la section d'articulation du véhicule guidant 14, sont en contact avec la surface de guidage de la came interne 31. Les chambres de volume variable disposées de part et d'autre du piston 34 sont reliées par des conduites 36 et 37 à des chambres analogues existant dans un second cylindre hydraulique 38, de part et d'autre du piston 39.

La tige 40 du piston 39 est tourillonnée en 41 sur le bras 25 du levier coudé 25—26.

Le jeu de leviers et de tringles est le même que celui des formes de réalisation antérieures. Grâce au transfert des excédants ou manquants volumétriques résultant du déplacement des pistons 35 et 38, il est aisé de faire varier selon la loi de la came interne 31, l'angularité des fusées des roues 13 et 13' par rapport à celle de l'articulation reliant les véhicules guidé et guidant.

La lecture des figures 2 et 3 enseigne qu'en partant d'une position de non braquage, dans laquelle les véhicules guidant et guidé sont alignés pour passer, au début de braquage, à l'angle de flambage $\beta$, on ne détermine à l'essieu arrière du véhicule guidant qu'un angle $\alpha$, très inférieur à l'angle $\beta$.

L'angle $\alpha$ n'atteint la valeur totale désirée pour les raisons d'inscription en courbe qu'à l'angularité d'articulation correspondant à ces conditions légales d'inscription en courbe. La même situation se développe entre les angles $\alpha$ et $\beta$ lors bu braquage vers la droite.

De ce fait, l'effet directionnel de l'essieu arrière est négligeable ou nul tant dans des positions respectives des parties du véhicule articulé proches de l'alignement, ce qui garantit une grande stabilité directionnelle à grande vitesse, qu'au départ en braquage le long d'un trottoir ce qui limite les déports de l'essieu du véhicule guidé et de son porte-à-faux arrière à des valeurs reconnues acceptables.

Les formes de réalisation selon les figures 2 et 3 apportent donc la solution idéale aux problèmes évoqués dans le préambule.

Des descriptions qui précèdent résulte clairement qu'il est possible, avec des moyens mécaniques présentant une grande simplicité du point de vue de leur conception ainsi qu'une grande robustesse à l'usage, de contrôler le comportement correct en courbe d'un véhicule articulé.

**Revendications**

1. Véhicule routier articulé, constitué d'un véhicule guidant (14) équipé d'essieux avant et arrière, l'essieu avant étant dirigé par des moyens de direction conventionnels et l'essieu arrière ayant des moyens de directions commandés, et d'un véhicule guidé (16) relié au véhicule guidant par une articulation, caractérisé en ce que les moyens de directions de l'essieu arrière du véhicule guidant sont commandés en fonction de l'angle de flambage ($\beta$) entre le véhicule guidant et le véhicule guidé, à partir d'une section d'articulation (3, 15, 31) solidaire du véhicule guidé.

2. Véhicule routier selon la revendication 1, caractérisé en ce que les moyens de direction précités sont constitués par une bielle tourillonnant (1) d'une part sur une rotule (2) montée sur la section d'articulation solidaire du véhicule guidé et, d'autre part, sur une rotule montée sur un levier ou bras-relais de direction (5) agissant sur un jeu de leviers (5, 6, 10) capable d'orienter les fusées (12) de l'essieu arrière précité.

3. Véhicule routier selon la revendication 1, caractérisé en ce que les moyens de direction précités agissant sur les fusées de l'essieu arrière précité comportent une bielle (17) tourillonnant d'une part sur une rotule (18) montée sur la section d'articulation (15) solidaire du véhicule guidé et, d'autre part, sur la base (20') d'un levier à bras multiples en forme de T (20) disposés de part et d'autre d'un axe de rotation (21) dudit levier sur le véhicule guidant (14) précité, les autres extrémités libres des bras précités étant équipées de roues à gorge (22, 22') pour suivre, chacune, une des courbures internes d'une came (23) en forme de ''d'' dont la partie rectiligne est à assimiler à une seconde bielle (23') dont l'extrémité libre tourillonne sur une rotule (24) fixée sur un levier (25), ou bras-relais de direction, agissant sur un jeu de leviers (26, 27, 28) capable d'orienter les fusées de l'essieu arrière précité.

4. Véhicule selon la revendication 3, caractérisé en ce que les bielles précitées et le jeu de leviers précités sont agencés de telle manière que le sens de rotation de l'articulation reliant les véhicules guidé et guidant et les sens de rotation des axes géométriques des fusées précitées soient les mêmes.

5. Véhicule selon l'une quelconque des revendications 2 à 4, caractérisé en ce que le jeu de leviers précité comporte un levier coudé (25) dont un bras est solidaire de la fusée d'une roue (13) et dont l'extrémité est reliée à la bielle (23') précitée tandis que l'autre extrémité est reliée à charnière à une tringle (28) reliée d'autre part à charnière à un second levier (27) agissant à la manière du levier coudé cité en premier lieu sur l'orientation de la fusée de la roue (13') opposée du même essieu.

6. Véhicule routier selon la revendication 1, caractérisé en ce que l'articulation reliant les véhicules guidant (14) et guidé (16) est équipée, au centre de la section solidaire du véhicule guidé, d'une came (31) dont la rotation agit sur un piston (33) qui se meut dans un cylindre hydraulique (35) monté au centre la section d'articulation solidaire du véhicule guidant pour refouler alternativement un liquide hydraulique dans deux conduites (36, 37) communiquant avec un second cylindre (38), de part et d'autre d'un piston (39) se déplaçant dans ce second cylindre sous l'influence des variations volumétriques, la tige dudit piston agissant sur un jeu de leviers (25, 26) solidaires des fusées des roues pour agir sur leur orientation.

7. Véhicule routier selon l'une quelconque des revendications 1—6, caractérisé en ce que le véhicule précité est un autobus du type pousseur constitué d'un véhicule guidant (14) équipé d'essieux avant et arrière non-moteurs et d'un véhicule guidé (16) à essieux moteurs.

## Patentansprüche

1. Straßen-Gelenkfahrzeug, bestehend aus einem führenden Fahrzeug (14) mit einer Vorder- und einer Hinterachse, von denen die Vorderachse mittels herkömmlicher Lenkeinrichtungen lenkbar ist und die Hinterachse betätigbare Lenkeinrichtungen hat, und einem über ein Gelenk mit dem führenden Fahrzeug verbundenen geführten Fahrzeug (16), dadurch gekennzeichnet, daß die Lenkeinrichtungen der Hinterachse des führenden Fahrzeugs von einer fest mit dem geführten Fahrzeug verbundenen Gelenkanordnung (3, 15, 31) aus in Abhängigkeit vom Abknickwinkel ($\beta$) zwischen dem führenden Fahrzeug und dem geführten Fahrzeug betätigbar sind.

2. Straßenfahrzeug nach Anspruch 1, dadurch gekennzeichnet, daß die Lenkeinrichtungen eine einerseits an einem an der fest mit dem geführten Fahrzeug verbundenen Gelenkanordnung montierten Lagerring (2) angelenkte Verbindungsstange (1) aufweisen, welche andererseits über ein Gelenk mit einem Lenkhebel (5) verbunden ist, welcher seinerseits betätigungsübertragend mit einem die Lenkung der Achsschenkel (12) der Hinterachse bewirkenen Gestänge (5, 6, 10) verbunden ist.

3. Straßenfahrzeug nach Anspruch 1, dadurch gekennzeichnet, daß die auf die Achsschenkel der Hinterachse einwirkenden Lenkeinrichtungen eine Lenkstange (17) aufweisen, welche einerseits an einem an der fest mit dem geführten Fahrzeug verbundenen Gelenkanordnung montierten Lagerring (18) und andererseits an der Basis (20') eines mehrarmigen T-förmigen Hebels (20) angelenkt ist, welcher um eine Drechachse (21) verdrehbar auf dem führenden Fahrzeug (14) gelagert ist, daß die freien Enden der anderen Arme des Hebels eine umlaufende Rille aufweisende Rollen (22, 22') tragen, welche entlang den Innenkurven einer etwa die Form der Buchstabens "D" aufweisenden Kulisse (23) abrollen, deren geradliniges Teil zu einer zweiten Lenkstange (23') verlängert ist, deren freies Ende über ein Gelenk (24) mit einem Lenkhebl (25) verbunden ist, welcher seinerseits mit einem die Lenkung der Achsschenkel der Hinterachse bewirkenden Gestänge (26, 27, 28) verbunden ist.

4. Fahrzeug nach Anspruch 3, dadurch gekennzeichnet, daß die genannten Lenkstangen und das genannte Gestänge so ausgebildet sind, daß die Abknickrichtung des gas geführte mit dem führenden Fahrzeug verbindenden Gelenks die gleiche ist wie die Einschlagrichtung der geometrischen Achsen der genannten Achsschenkel.

5. Fahrzeug nach einem der Ansprüche 2 bis 4, dadurch gekennzeichnet, daß das genannte Gestänge einen Winkelhebel (25) aufweist, von welchem ein Arm fest mit dem Achsschenkel eines Rades (13) verbunden ist und dessen freies Ende mit den genannten Lenkstange (23') verbunden ist, während das andere Ende gelenkig mit einer Spurstange (28) verbunden ist, deren anderes Ende mit einem zweiten Hebel (27) verbunden ist, welcher in der gleichen Weise wie der vorstehend genannte Winkelhebel auf die Lenkung des Achsschenkels des gegenüberliegenden Rades (13') der gleichen Achse einwirkt.

6. Straßenfahrzeug nach Anspruch 1, dadurch gekennzeichnet, daß die das führende Fahrzeug (14) mit dem geführten Fahrzeug (16) verbindende Gelenkanordnung in der Mitte des fest mit dem geführten Fahrzeug verbundenen Abschnitts eine Kurvenkulisse (31) aufweist, deren Verdrehung auf einen Kolben (33) einwirkt, welcher in einem hydraulischen Zylinder (35) beweglich geführt ist, welcher seinerseits in der Mitte des fest mit dem führenden Fahrzeugs verbundenen Abschnitts der Gelenkanordnung angeordnet ist, um eine hydraulische Flüssigkeit wechselweise über zwei Leitungen (36, 37) zu verdrängen, welche beider seits eines Kolbens (39) mit einem zweiten Zylinder (38) strömungsverbunden sind, so daß der Kolben unter Einfluß der volumetrischen Änderungen in dem zweiten Zylinder bewegbar ist, wobei die Kolbenstange des Kolbens auf eine fest mit den Achsschenkeln der Räder verbundene Hebelanordnung (25, 26) einwirkt, um die Lenkung zu bewerkstelligen.

7. Starßenfahrzeug nach einem der Ansprüche 1 bis 6, dadurch gekennzeichnet, daß das genannte Fahrzeug ein Schubwagen-Autobus ist, bestehend aus einem führenden Fahrzeug (14) mit nicht angetriebenen Vorder- und Hinterachsen und einem geführten Fahrzeug (16) mit angetriebenen Achsen.

## Claims

1. Articulated road vehicle, comprised of a guiding vehicle (14) fitted with front and back axles, the front axle being directed by conventional steering means and the back axle having controlled steering means, and of a guided vehicle (16) connected to the guiding vehicle by a hinge, characterized in that the steering means for the back axle of the guiding vehicle are controlled according to the lateral flexion angle $(\beta)$ between the guiding vehicle and guided vehicle, from a hinge unit (3, 15, 31) integral with the guided vehicle.

2. Road vehicle according to claim 1, characterized in that said steering means are comprised of a link swivelling (1) on the one hand on a swivel-joint (2) mounted on the hinge unit integral with the guided vehicle, and on the other hand on a swivel joint mounted on a lever or steering relay-arm (5) acting on a lever set (5, 6, 10) which can direct the spindles (12) of said back axle.

3. Road vehicle according to claim 1, characterized in that said steering means acting on the spindles of said back axle comprise a link (17) swivelling on the one hand on a swivel joint (18) mounted on the hinge unit (15) integral with the guided vehicle, and on the other hand on the bottom (20') of a lever with a plurality of arms in T-shape (20) arranged on either side of a rotation axis (21) of said lever on said guiding vehicle (14), the other free ends of said arms being fitted with grooved wheels (22, 22') which are each to follow the one inner curve of a "d"-shaped cam (23) the straight portion of which is to be considered as a second link (23') the free end of which swivels on a swivel-joint (24) secured to a lever (25) or steering relay-arm, acting on a lever set (26, 27, 28) which can direct the spindles of said back axle.

4. Vehicle according to claim 3, characterized in that said links and said lever set are so arranged that the revolution direction of the hinge connecting the guided and guiding vehicles together, and the revolution direction of the geometrical axes of said spindles be the same.

5. Vehicle according to any one of claims 2 to 4, characterized in that said lever set comprises a bent lever (25) the one arm of which is integral with the spindle of one wheel (13) and the end of which is connected to said link (23') while the other is hingedly connected to a rod (28) which is hingedly connected on the other hand to a second lever (27) acting in the same way as said first bent lever on the directing of the spindle of the opposite wheel (13') on the same axle.

6. Road vehicle according to claim 1, characterized in that the hinge connecting the guiding (14) and guided (16) vehicles together is fitted in the center of the unit integral with the guided vehicle, with a cam (31) the rotation of which acts on a piston (33) which moves inside a hydraulic cylinder (35) mounted in the center of the hinge unit integral with the guiding vehicle to force alternately a hydraulic liquid into two lines (36, 37) communicating with a second cylinder (38), on either side of a piston (39) moving inside said second cylinder under the action of the volume changes, the rod of said piston acting on a lever set (25, 26) integral with the wheel spindles so as to act on the directing thereof.

7. Road vehicle according to any one of claims 1—6, characterized in that said vehicle is a pusher-type bus comprised of a guiding vehicle (14) provided with non-motive front and back axles, and of a guided vehicle (15) with motive axles.

FIG.1

FIG. 2

FIG.3